# EUROPEAN PATENT SPECIFICATION

(11) **EP 0 404 113 B1**
(45) Date of publication and mention of the grant of the patent: **15.02.1995**
(21) Application number: 90111673.1
(22) Date of filing: 20.06.1990
(51) Int. Cl.: B65H 5/10, B65H 5/00

(54) **Sheet feeding apparatus**
Bogenzuführender Apparat
Appareil d'alimentation en feuilles

(30) Priority: 21.06.1989 JP 159171/89
(43) Date of publication of application: 27.12.1990
(73) Proprietor: CANON KABUSHIKI KAISHA, Tokyo (JP)
(72) Inventor: Nishimoto, Yoshifumi, c/o Canon Kabushiki Kaisha, Tokyo (JP); Igaki, Masahiko, c/o Canon Kabushiki Kaisha, Tokyo (JP); Kataoka, Kenichi, c/o Canon Kabushiki Kaisha, Tokyo (JP); Sugimoto, Naruto, c/o Canon Kabushiki Kaisha, Tokyo (JP); Seki, Hiroyuki, c/o Canon Kabushiki Kaisha, Tokyo (JP); Kimura, Atsushi, c/o Canon Kabushiki Kaisha, Tokyo (JP); Yanagi, Eiichi, c/o Canon Kabushiki Kaisha, Tokyo (JP)
(74) Representative: Tiedtke, Harro, Dipl.-Ing.

(56) References cited:
- DE-A- 3 312 037
- GB-A- 1 364 390
- US-A- 4 672 256
- PATENT ABSTRACTS OF JAPAN, unexamined applications, M section, vol. 9, no. 34,February 14, 1985 THE PATENT OFFICE JAPANESE GOVERNMENT page 110 M 357

## Description

The present invention relates to a sheet feeding apparatus arranged in a calculator, a copying machine, a facsimile apparatus, a wordprocessor, a typewriter, and any other machines having sheet feeding mechanisms and, more particularly, to a sheet feeding apparatus utilizing a travelling vibration wave.

### Related Background Art

A conventional apparatus of this type generates a travelling vibration wave in elastic members to clamp and feed a sheet, as disclosed in Japanese Patent Laid-Open No. 59-177243.

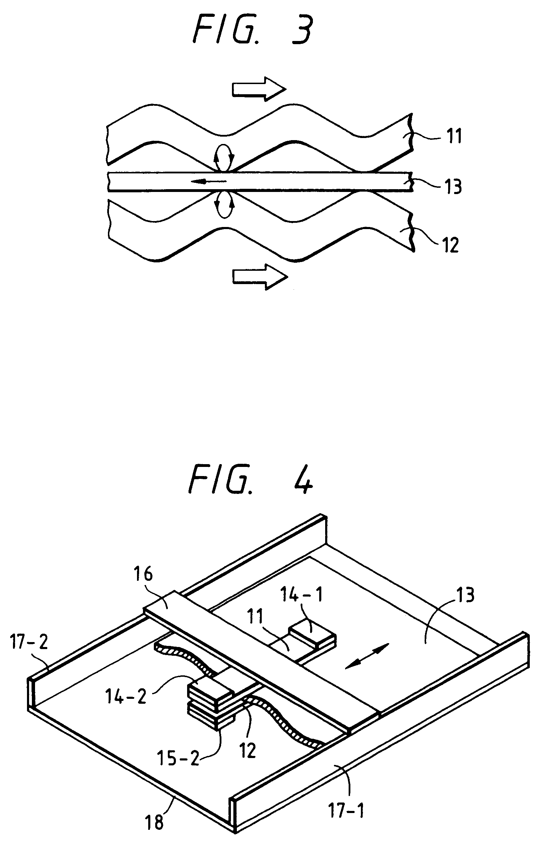

The principle of sheet feeding according to this proposal will be described with reference to Fig. 3.

A sheet 13 is clamped between elastic members 11 and 12 at a proper pressure. Travelling bending vibrations (travelling vibration waves) are generated on the elastic members 11 and 12, respectively. A phase difference between these travelling vibration waves is set to be spatially 180°. The bending vibrations of the elastic members 11 and 12 travel so that loops of the waves always contact the sheet 13. At this time, a mass point of a loop portion on the surface of each of the elastic members 11 and 12 is taken into consideration. The mass point is generally subjected to elliptical motion. For example, in the elastic member 11 shown in Fig. 3, when the corresponding travelling vibration wave travels in the right direction, the mass point traces an elliptical track in the clockwise direction indicated in Fig. 3. Therefore, the motion of the mass points of the loops of the elastic members 11 and 12 is opposite to the travelling direction of the vibration and serves as a force for feeding the sheet 13.

In the recessed portions, i.e., nodes of the waves, a sheet feeding force is generated in the same direction as the wave travelling direction. However, the forces generated by the recessed portions are smaller than those by the projection portions or loops, so that frictional forces between the sheet 13 and the elastic members 11 and 12 are small and the sheet feeding force is also small. Therefore, a total sheet feeding force is directed in a direction opposite to the travelling direction of the bending vibrations.

Fig. 4 shows an arrangement of an apparatus for generating the sheet feeding force described above. This apparatus has elastic members 11 and 12 which clamp a sheet 13. Vibrators 14-1 and 14-2 are fixed on the elastic member 11, and vibrators 15-1 and 15-2 (the vibrator 15-1 is not illustrated in Fig. 4) are fixed to the elastic member 12. A press support member 16 holds and supports the elastic members 11 and 12. The press support member 16 is bridged across support side plates 17-1 and 17-2. The side plates 17-1 and 17-2 are supported by a base plate 18.

The elastic member 12 is supported on the base plate 18, and the elastic member 11 is supported by the press support member 16. The elastic member 11 urges the sheet 13 by a spring force of the press support member 16 and clamps the sheet 13 with the elastic member 12. When a voltage having a given frequency is applied to the vibrators of the elastic members 11 and 12 to generate vibrations, the projection portions of the elastic members 11 and 12 always oppose each other, so that a sheet feeding force is generated and the sheet is fed in a direction indicated by an arrow in Fig. 4. In this case, the arrow is a double-heated arrow which represents opposite directions. The travelling direction of the vibrations can be switched to an opposite direction to switch the sheet feeding direction.

This sheet feeding apparatus has an advantage in that the sheet is directly fed by vibrations of the elastic members to eliminate a transmission loss of a gear or the like so as to achieve high-precision feeding as compared with a feeding system in which a sheet is fed by rotation of a paper feeding roller upon transmission of a driving force of a motor through a transmitting means such as a gear. However, in the sheet feeding apparatus utilizing the elastic members, ramp and lateral offset of the sheet may occur due to irregularity of the thicknesses of sheets.

### Summary of the Invention:

It is an object of the present invention to provide a sheet feeding apparatus utilizing travelling vibration waves to feed a sheet straight without causing sheet ramp and lateral offset.

It is another object of the present invention to provide a feeding apparatus utilizing travelling vibration waves to feed a movable member straight without causing ramp and lateral offset of the movable member.

The above and other objects, features, and advantages of the present invention will be apparent from the detailed description in conjunction with the accompanying drawings.

### BRIEF DESCRIPTION OF THE DRAWINGS:

Fig. 1 is a schematic view showing a sheet feeding apparatus according to an embodiment of the present invention;
Fig. 2A is a perspective view showing a state wherein the sheet feeding apparatus shown in Fig. 1 is mounted in a printer housing;
Fig. 2B is a plan view of the mounting state shown in Fig. 2A;
Fig. 3 is a view for explaining the principle of sheet feeding; and
Fig. 4 is a perspective view showing a conventional sheet feeding apparatus.

### DESCRIPTION OF THE PREFERRED EMBODIMENT:

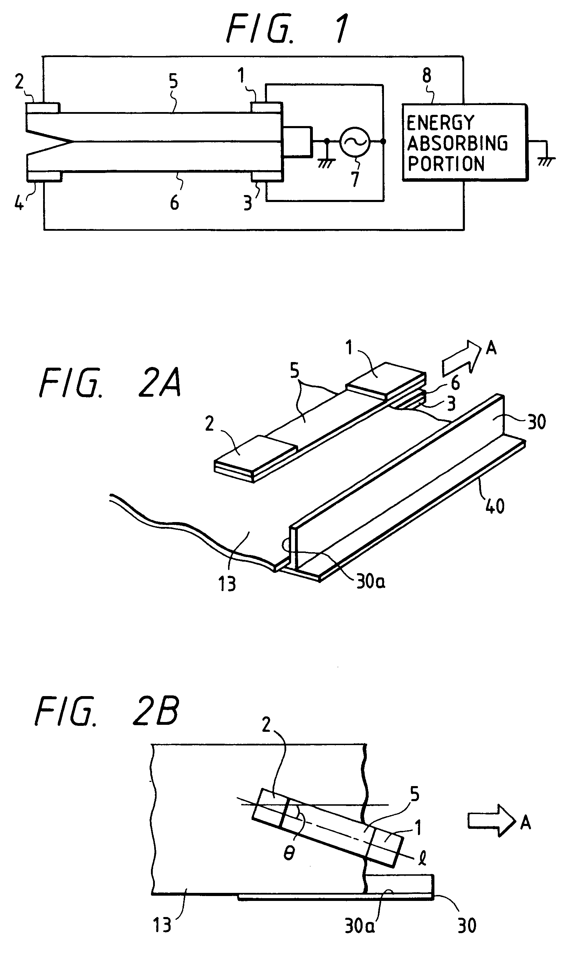

Fig. 1 shows an embodiment of a printer apparatus which employs the present invention. Vibrators 1, 2, 3, and 4 comprise known electro-mechanical energy conversion elements made of piezoelectric elements. Elastic members 5 and 6 have rough surfaces which are brought into contact with a sheet (not shown). An oscillator 7 comprises a known oscillator for applying a frequency voltage to the vibrators 1 to 4. An energy absorbing portion 8 comprises a known energy absorbing portion for causing the elastic members 5 and 6 to generate travelling vibration waves.

The vibrators 1 and 2 are adhered to the elastic member 5 by an adhesive. Similarly, the vibrators 3 and 4 are adhered to the elastic member 6 by an adhesive. The elastic members 5 and 6 are urged by a proper force. In this embodiment, the elastic members 5 and 6 as conductive members are connected to a ground circuit. Vibrations are generated by the elastic members 5 and 6 upon application of a frequency voltage (AC electric field) from the oscillator 7 to the vibrators 1 and 3. The vibrators 2 and 4 generate a power upon vibrations of the elastic members 5 and 6. A generated electrical energy is dissipated by the energy absorbing portion 8 including a resistor, and the vibrations can be directly converted into travelling vibration waves without being reflected. One point on each surface of the elastic members 5 and 6 upon conversion of vibrations into travelling vibration waves is taken into consideration. The track of this point is an elliptical track. A portion outside the track always has a speed component in a direction opposite to the travelling vibration wave propagating direction, and the sheet is always fed in a direction opposite to the travelling vibration wave propagating direction. The sheet is fed from the left to the right in Fig. 1.

Figs. 2A and 2B show a state wherein the elastic members 5 and 6 shown in Fig. 1 are mounted in the printer housing, in which Fig. 2A is a schematic perspective view thereof, and Fig. 2B is a plan view thereof.

A sheet guide 30 is mounted on a base 40 of the printer housing. The guide 30 has a guide surface 30a. One side of the sheet 13 is brought into contact with the guide surface 30a, and the guide surface 30a regulates sheet movement in a direction perpendicular to the sheet travelling direction (i.e., a direction indicated by an arrow in Figs. 2A and 2B).

The elastic members 5 and 6 are supported on the printer housing as in the conventional example shown in Fig. 4. In this embodiment, however, a traveling axis ℓ is inclined by ϑ (Fig. 2B) from a sheet feeding direction. This inclination is determined such that the front ends of the elastic members 5 and 6 at the downstream side of the sheet feeding direction come close to the sheet guide 30.

More specifically, a moving force applied from the elastic members 5 and 6 to the sheet 13 has both components, i.e., a component in the feeding direction indicated by an arrow A and a component in a direction to bring the sheet 13 into contact with the guide surface 30a of the sheet guide 30.

As a result, the moving direction of the sheet 13 is the same as the direction indicated by the arrow A in a state wherein the sheet 13 is in contact with the guide surface 30a of the sheet guide 30. Therefore, the sheet 13 can be fed straight without causing ramp and lateral offset.

In the above embodiment, since the sheet 13 is forcibly urged against the sheet guide 30, a distance between the guide surface 30a and the elastic members 5 and 6 is preferably minimum in favor of prevention of bending of the sheet 13.

The inclination angle ϑ of the elastic members 5 and 6 is preferably 10° or more to apply a force component enough to bring the sheet into contact with the sheet guide 30.

The elastic member in this embodiment is linear. However, the shape of the elastic member is not limited to any specific shape. An elliptical elastic member as disclosed in U.S.P. No. 4,672,256 (issued on June 9, 1987) may be incorporated in the present invention. In this case, the travelling axis of the travelling vibration waves of the elliptical elastic member is inclined by an angle ϑ at the downstream side of the sheet feeding direction, thereby preventing sheet ramp and lateral offset.

According to the present invention, as has been described above, an urging force is forcibly applied to a sheet so as to bring it into contact with the guide, and sheet ramp and lateral offset can be prevented. Therefore, the sheet can be fed straight.

Disclosed is a sheet feeding apparatus including a feeding unit for causing vibration surfaces of elastic members for generating travelling vibration waves to apply a feeding force to a sheet so as to feed it and a sheet guide member brought into contact with a side of the sheet to feed the sheet in the sheet feeding direction. The elastic members are inclined from the sheet feeding direction so as to apply a force component in the feeding direction and a force component in the guide member direction to the sheet.

## Claims

1. A sheet feeding apparatus comprising a vibration member (1, 2, 3, 4, 5, 6) brought into contact with a sheet (13) and an electro-mechanical engery conversion member for generating a travelling vibration wave in said vibration member in response to an applied electric signal, said sheet (13) being fed by the vibration wave, **characterized in that** said sheet feeding apparatus comprises a sheet guide member (30, 30a) brought into contact with a sheet side to guide the sheet (13) in a sheet feeding direction (A), and **that** said vibration member (1, 2, 3, 4, 5, 6) has a travelling vibration wave axis inclined (Θ) from the sheet feeding direction (A) so as to apply a force component in the sheet feeding direction (A) and a force component in a guide member direction to the sheet (13).

2. A sheet feeding apparatus according to claim 1, wherein said vibration member (1 to 6) includes an elastic element (11, 12) that is in contact with the sheet (13).

3. A sheet feeding apparatus according to claim 1, wherein said elastic element (11, 12) includes a linear-shaped portion.

4. A sheet feeding apparatus according to claim 1, wherein the travelling axis of the travelling vibration wave of said vibration member is inclined (Θ) by not less than 10° from the sheet feeding direction (A).

5. A printer incorporating a sheet feeding apparatus as claimed in any one of claims 1 to 4.

6. A printer according to claim 5, wherein said guide member (30, 30a) is fixed to a base plate (40) of a printing device.

## Patentansprüche

1. Bogenzuführender Apparat, der ein Schwingungsteil (1,2,3,4,5,6) aufweist, das mit einem Bogen (13) in Kontakt gebracht ist, ein elektromechanisches Energie-Wandler-Element zur Erzeugung einer Bewegungs-Schwingungs-Welle in dem Schwingungsteil als Reaktion auf ein aufgebrachtes elektrisches Signal, wobei der Bogen (13) durch die Schwingungswelle befördert wird, **dadurch gekennzeichnet**, daß der bogenzuführende Apparat eine Bogenführung (30,30a) aufweist, die mit einer Seite des Bogens in Kontakt gebracht wird, um den Bogen (13) in einer Bogen-Förder-Richtung (A) zu führen, und daß das Schwingungsteil (1,2,3,4,5,6) eine Bewegungs-Schwingungs-Wellen-Achse aufweist, die in einem Winkel (Θ) zu der Bogen-Förder-Richtung (A) geneigt ist, um eine Kraftkomponente in Richtung der Bogen-Förder-Richtung (A) und eine Kraftkomponente in Richtung des Führungsteils bezogen auf den Bogen (13) aufzubringen.

2. Bogenzuführender Apparat nach Patentanspruch 1, wobei das Schwingungsteil (1,2,3,4,5,6) ein elastisches Element (11,12) aufweist, das in Kontakt mit dem Bogen (13) ist.

3. Bogenzuführender Apparat nach Patentanspruch 1, wobei das elastische Element (11,12) einen länglichen Abschnitt aufweist.

4. Bogenzuführender Apparat nach Patentanspruch 1, wobei die Bewegungsachse der Bewegungs-Schwingungs-Welle des Schwingungsteils in einem Winkel Θ von nicht weniger als 10 Grad zu der Bogenförderrichtung A geneigt ist.

5. Drucker, der einen bogenzuführenden Apparat nach einem der Patentansprüche 1 bis 4 aufweist.

6. Drucker nach Patentanspruch 5, wobei das Führungsteil (30,30a) auf der Grundplatte der Druckvorrichtung befestigt ist.

## Revendications

1. Appareil d'alimentation en feuilles comprenant un élément de vibration (1, 2, 3, 4, 5, 6) mis en contact avec une feuille (13) et un élément de conversion d'énergie électromécanique pour générer une onde progressive de vibration dans ledit élément de vibration en réponse à un signal électrique appliqué, ladite feuille (13) étant alimentée par l'onde de vibration, **caractérisé en ce que** ledit appareil d'alimentation en feuilles comporte un élément (30, 30a) de guidage de feuille mis en contact avec le côté d'une feuille pour guider la feuille (13) dans une direction (A) d'alimentation en feuilles, et **en ce que** ledit élément de vibration (1, 2, 3, 4, 5, 6) a un axe d'onde progressive de vibration incliné (ϑ) par-rapport à la direction (A) d'alimentation en feuilles de manière à appliquer une composante de force dans la direction (A) d'alimentation en feuilles et une composante de force dans la direction de l'élément de guidage vers la feuille (13).

2. Appareil d'alimentation en feuilles selon la revendication 1, dans lequel ledit élément de vibration (1 à 6) comporte un élément élastique (11, 12) qui est en contact avec la feuille (13).

3. Appareil d'alimentation en feuilles selon la revendication 1, dans lequel ledit élément élastique (11, 12) comporte une partie de forme linéaire.

4. Appareil d'alimentation en feuilles selon la revendication 1, dans lequel l'axe de progression de l'onde progressive de vibration dudit élément de vibration est incliné (ϑ), d'un angle non inférieur à 10°, par rapport à la direction (A) d'alimentation de la feuille.

5. Imprimante incorporant un appareil d'alimentation en feuilles selon l'une quelconque des revendications 1 à 4.

6. Imprimante selon la revendication 5, dans laquelle ledit élément de guidage (30, 30a) est fixé à une plaque de base (40) d'un dispositif d'impression.
